# EUROPEAN PATENT SPECIFICATION

(11) **EP 4 557 671 B1**
(45) Date of publication and mention of the grant of the patent: **07.10.2026**
(21) Application number: 25160660.4
(22) Date of filing: 30.08.2023
(51) Int. Cl.: H04L 47/34, H04L 49/112, H04L 49/20, H04L 9/40, H04L 49/65, H04L 49/9057

(54) **MULTI-ENGINE PACKET PROCESSING WITH TABLE UPDATES**
TRAITEMENT DE PAQUETS MULTI-MOTEURS AVEC MISES À JOUR DE TABLE
MULTI-ENGINE PAKETVERARBEITUNG MIT TABELLENAKTUALISIERUNGEN

(30) Priority: 01.02.2023 US 202318104558
(43) Date of publication of application: 21.05.2025
(62) Document number(s) of the earlier application(s) in accordance with Art. 76 EPC: 23194334.1 / 4 412 176
(73) Proprietor: Google LLC, Mountain View, CA 94043 (US)
(72) Inventor: THANTRY, Hariharan Lakshminarayanan, Mountain View, 94043 (US); NAIR, Rajeev, Mountain View, 94043 (US)
(74) Representative: Betten & Resch

(56) References cited:
- EP-B1- 1 846 836
- US-A1- 2020 142 760
- US-B2- 7 626 987

## Description

### BACKGROUND

Hardware packet processing architectures may realize high-performance packet processing using, for example, multiple packet processing engines specially adapted for performing pipelined table lookups (e.g., a smart network interface card or a smart NIC). Certain packet processing architectures may use the same processing unit or engines for every packet belonging to the same flow. A packet ordering requirement for a flow in an endpoint packet processing element (e.g., a NIC or smart NIC) may require that the packets be presented to the endpoint subsystem in the same order as they arrive for packet processing, for example, into a packet processing complex (e.g., a host, a datacenter). However, the above architecture may be inefficient when the size of the packet flow becomes large since all packets belonging to the same packet flow would be processed by the same engine while other engines could potentially be idle.

Another packet processing architecture may spray packets belonging to the same flow to multiple engines through a centralized scheduler that then retires the packets in order upon completion of processing (e.g., via a smart NIC). Egress queue resources are reserved when the packets are launched, and a particular packet belonging to a flow may not be retired until all prior packets for the same flow have been retired or a pre-configured timeout has been exceeded. This is intended to preserve the in-order semantics of packet processing as observed by, for example, an end-host.

Although the above multi-engine packet processing architecture may improve packet processing performance, it may run into a correctness issue in the presence of table updates. For example, assuming each processing engine executes a pipeline that comprises multiple table lookups, any update to a table is usually required to also satisfy the same in-order guarantees for the same packet flow. For instance, a new Access Control List (ACL) rule may be inserted into an ACL table and eventually be made visible to all engines within a NIC. The newly inserted rule may, however, not be made visible in the order of packet arrivals for a given flow. As such, processing of packets within the given flow may not be done in accordance with the new rule after the update is in place and the new rule takes effect.

Document US 7626987 B2 relates to communications and computer systems, especially routers, packet Switching systems, and other devices; and more particularly to using ordered locking mechanisms to maintain sequences of items which may include converting between ordered locking mechanisms.

Document US 2020/142760 A1 refers to a method for packet processing on a multi-core processor. A first set of one or more processing cores are configured to include the capability to process packets belonging to a first set of one or more packet types, and a second set of one or more processing cores are configured to include the capability to process packets belonging to a second set of one or more packet types, where the second set of packet types is a subset of the first set of packet types.

Document EP 1846836 B1 relates to communications and computer systems, especially routers, packet switching systems, and other network packet processing devices.

### SUMMARY

The present invention is defined by the independent claims. Preferred embodiments are defined by the dependent claims.

A non-claimed aspect of the disclosure includes an apparatus comprising one or more processing engines configured to process data packets received by the apparatus in accordance with a packet flow and one or more processing cores adapted to receive updates associated with the packet flow. The apparatus further comprises a scheduler communicatively coupled to the one or more processing cores and one or more processing engines. In response to a notification that at least one of the one or more processing cores received a first update associated with the packet flow, the scheduler selects a first processing engine of the one or more processing engines to process one or more unprocessed data packets of the packet flow.

In an example, the notification is generated by at least one of the one or more processing cores based on detection of the first update in a table entry library.

In yet another example, the notification may comprise an order request in an ordering queue that is communicatively coupled between the at least one of the one or more processing cores and the scheduler.

In yet another example, in response to the notification the scheduler instructs all processing engines of the one or more processing engines processing the packet flow to perform any unprocessed instructions.

In yet another example, upon completing any unprocessed instructions, each of the processing engines of the one or more processing engines processing the packet flow send a completion message to the scheduler indicating that any unprocessed instructions have been completed.

In yet another example, upon receiving completion messages from each the processing engines of the one or more processing engines processing the packet flow, the scheduler switches processing of the one or more unprocessed data packets of the packet flow to the first processing engine.

In yet another example, prior to receipt of the notification by the scheduler the data packets were processed by a plurality of processing engines of the one or more processing engines.

In yet another example, the first update comprises an update to an access control list table associated with the packet flow.

In yet another example, the apparatus comprises one of a network interface card, a router, a switch or a host.

In yet another example, the one or more processing engines comprise one or more accelerator engines.

A claimed aspect of the disclosure is a method for packet processing in a system comprising multiple packet processing engines. The method comprises receiving, at a scheduler operating in a first mode in which the packets are distributed among the multiple packet processing engines for processing, an ordering request. The method also comprises switching, by the scheduler in response to the ordering request, to a second mode of operation in which all packets belonging to a same ordering domain are sent to a given engine for in-order processing. The method further includes determining, by the scheduler, that the in-order processing is complete. The method also includes switching, by the scheduler, to the first mode.

In an example, the method further comprises issuing, in response to the ordering request, a fence instruction to one or more other processing engines. The method also includes receiving a fence acknowledgment from each of the one or more other processing engine, the fence acknowledgment. The method further includes indicating that a respective engine has finished committing instructions.

In yet another example, the ordering request comprises an indication that a parameter associated with processes implemented by at least one of the multiple packet processing engines has changed.

In yet another example, the shared memory has an associated shared counter, and wherein the shared counter is incremented when an ordering request is received and decremented when the ordering request is complete.

In yet another example, the shared memory supports a request state, a response state, and a completion state.

In yet another example, the method also includes changing, by the given engine, a state of the shared memory to the response state when the acknowledgment is received from each engine.

In yet another example, the method further includes changing the state of the shared memory to the completion state when in-order processing is complete.

In yet another example, in the first mode the packets are distributed among the packet processing engines without consideration of an ordering identifier.

In yet another example, the method also includes receiving at an Access Control List (ACL) table an ordering constraint, wherein the ordering constraint updates the ACL table.

In yet another example, the ordering constraint is translated to the ordering request.

### BRIEF DESCRIPTION OF THE DRAWINGS

FIG. 1 depicts a block diagram of an example packet processing architecture according to aspects of the disclosure.
FIG. 2 depicts a block diagram of an example packet processing architecture when a table entry is added according to aspects of the disclosure.
FIG. 3 depicts a block diagram of an example packet processing architecture according to aspects of the disclosure.
FIG. 4 depicts a block diagram of an example apparatus according to aspects of the disclosure.
FIG. 5 depicts a flow diagram of an example method for packet processing according to the invention.

### DETAILED DESCRIPTION

### Overview

Generally disclosed herein is an approach for maintaining packet ordering in a flow in the presence of table updates. The approach may provide a solution that mitigates correctness issues when there is an addition of instructions to hardware such as a circuit switch or a router while maintaining high packet processing rates. The approach may also include adding a software interface for a table update that is capable of receiving a certain ordering constraint that may influence table operation commands.

The disclosed technology generally comprises techniques or mechanisms that mitigate potential correctness issues associated with a packet flow being processed by a packet processing system (e.g., a smart NIC or other computing element). More specifically, the technology involves switching processing of a packet flow from an out-of-order multi-engine mode of operation to a single engine mode of operation for all packets belonging to the same ordering domain (e.g., in-order processing) in the presence of an update associated with an ACL rule. In addition, the technology may also switch back to the multi-engine mode of operation once in-order processing is completed. The disclosed technology may be implemented by modifying hardware and/or software components associated with a packet processing system. These components may reside on a NIC of a host system in a datacenter that provides services as part of a cloud computing environment. More generally, the disclosed technology may be implemented in any packet processing architecture that distributes packets belonging to the same ordering domain (i.e., a packet flow or data flow) to different sets of processing units (e.g., processor cores, processing or acceleration engines). In effect, the disclosed technology may be implemented to maintain per-flow packet ordering guarantees in the presence of changes to rules used to filter, or otherwise manage, traffic or packet flows (e.g., rules associated with an ACL).

More specifically, the disclosed technology provides a solution that mitigates correctness issues (e.g., packets not being sent in the order received) via relatively modest additions to hardware and/or software, while maintaining high packet processing rates. For instance, the disclosed technology may comprise a software interface for a table update that includes an ordering constraint that may influence the type of operation(s) to be performed in processing the packets. For example, the software interface may take the form of a table operation as follows:
table_op(op=Write, table=A,
entry={key,action},consistency={strong_consistency})
As indicated above, a consistency variable may be added to the table write operation. The presence of this variable may be translated into a series of micro-operations.

According to some examples, those operations may comprise a mechanism for a set of general purpose cores associated with NIC to issue an ordering request to a global scheduler associated with the NIC. This may take the form of a write to share memory (e.g., a mailbox, for example) operation that supports certain semantics. The mechanism may generally comprise a state machine that operates in accordance with the following framework:
1. Three states are supported: REQUEST_SYNC, RESPONSE_SYNC, COMPLETION_SYNC
2. General purpose cores can perform REQUEST_SYNC and COMPLETION_SYNC
3. Global schedulers can perform RESPONSE_SYNC
4. Posting multiple REQUEST_SYNC messages from the cores when a REQUEST_SYNC message is pending increments a shared counter associated with the shared memory
5. The state machine can only move from REQUEST_SYNC to RESPONSE_SYNC to COMPLETION_SYNC before accepting another REQUEST_SYNC

The first REQUEST_SYNC operation causes the global scheduler to issue a FENCE instruction to all engines associated with the global scheduler and for which a FENCE_ACK is expected back when the FENCE instruction reaches commit stage in the engine pipeline - ensuring that all instructions prior to the FENCE have been committed (e.g., performed or executed). More specifically, instructions received by engines prior to the issuance of a FENCE instructions may be processed. When all such instructions in each engine pipeline are committed, each engine may send "FENCE_ACK" instructions or messages to the global scheduler. Further, once the FENCE instruction is issued, the global scheduler switches to a different mode of operation where all packets belonging to the same ordering domain are processed by one or the same engine (e.g., in-order processing assuming an engine processes).

Once the global scheduler receives a FENCE_ACK from all engines, it changes the state of the variable in the mailbox (more generally a shared memory interface) to RESPONSE_SYNC, acknowledging that the engine subsystem has now entered the in-order processing mode or stage. The shared memory interface can be communicatively coupled to general purpose cores impacted by an update associated with processing a packet flow. The general purpose cores may poll the shared memory, and upon detecting the RESPONSE_SYNC or otherwise being notified of same, may begin updating the process flow (e.g., update ACL table(s), delete ACL table(s), etc.). The engine subsystem does not modify the shared counter associated with the mailbox.

The general purpose cores, global scheduler and engines may comprise components that make up a smart NIC or a switch. The general purpose cores may be part of the same System on Chip (SoC). These SoCs, in the networking context, comprise Data Processing Units (DPUs), which are sometimes referred to as smart NICs within the industry (but also may include a NIC, a host interface, network interface and other components). The SoCs typically include specialized packet processing engines, in addition to general purpose cores (e.g., ARM) integrated on a silicon die.

Once the state of the variable is changed to RESPONSE_SYNC, the general-purpose cores can issue the memory operation. The memory operation may include an entry insertion into an ACL table by one or more cores. Each core that issues an update, decrements the counter associated with the shared memory (e.g., a mailbox). Once the counter reaches a value of zero, the state of the shared memory (e.g., the mailbox) is changed to "COMPLETION_SYNC" and the global scheduler may receive the "COMPLETION_SYNC" message and a hardware micro-operation is posted to the global scheduler. Once the global scheduler receives the "COMPLETION_SYNC" message, the scheduler may switch back to its original mode of high-performance packet processing by distributing packets to engines without consideration of ordering identifiers, i.e., switch back to out-of-order processing.

A packet processing architecture in line with the foregoing discussions can be used to provide correctness in the presence of updates that may impact traffic flow in a data processing network. A feature of this architecture may include forcing in-order execution before issuing any update operation that requires ordering through the use of FENCE (starts in-order) and FENCE_ACK (pipeline in the specific engine is now in-order). Another feature includes low overhead signaling to the general purpose cores to issue updates during this phase (in-order processing). This results in having the update being seen by all remaining packets in a flow after a first packet in the flow sees the update. In other words, if packet P(n) of a flow sees the update, then packets P(n+1) . . . P(n+m), where m is the last packet in the flow, will also see the update. Another feature includes by switching back to out-of-order processing after the update reclaims the performance drop resulting from in-order processing during the update.

### Systems/Apparatus

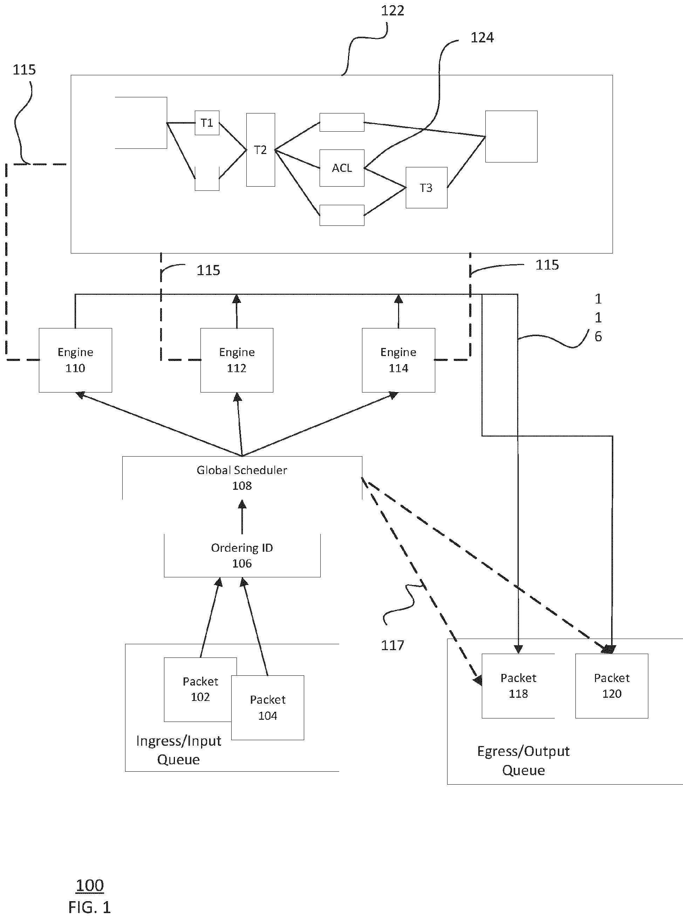

FIG. 1 depicts a block diagram of an example packet processing architecture 100. Packets 102, 104 comprise input packets belonging to the same flow that are provided as input for processing within the architecture. Packets belonging to different flows can proceed independently of each other. Only two packets are shown to avoid overcomplicating the diagram although in a practical application a stream of data packets would be input to ordering ID block 106. The packets are assigned unique order identifiers at ordering ID block 106 that track their order or sequence within a packet flow or when they arrive for processing. That order or sequence may be reflected via metadata added by ordering ID block 106 that indicates each packet's order or location in a packet flow or a packet flow to which each packet belongs. Global scheduler 108 receives the packets 102, 104, etc. and distributes them to engines 110, 112, 114 for processing. Each engine 110, 112, 114 performs processing using table flow graph 122, which is depicted as accessible by the engines via bus 115. Table flow graph 122 may include, in the typical case, multiple lookup tables such as table 124 and the other tables shown within 122, e.g., each block within 122 will typically be an ACL table.

Engines 110, 112, 114 are also coupled to an output queue depicted at output packets 118, 120. Global scheduler 108 uses the order identifiers generated by ordering ID block 106 to ensure that order of incoming packet flow, such in the case of the order of incoming packets 102, 104, is preserved at the output or egress queue via the order in which packets 118, 120 are placed in the output/egress queue. For example, if the ordering identifiers received at global scheduler 108 indicates that packet 102 precedes packet 104 in the packet flow, then global scheduler 108 will order the output such that packet 118 (assuming that this packet is the processed version of packet 102) is placed in queue before packet 120 (assuming this packet is the processed version of packet 104). In this regard, the engines 110, 112, 114 output their respective processed packets onto a data bus 116 coupled to the output queue associated with packets 118, 120.

The ordering ID block 106, global scheduler 108, engines 110-114, in the example shown in FIG. 1, may be components in smart NIC 100. In addition, the packets 102, 104 may be stored in an input/ingress queue for processing and packets 118, 120 may be stored in an egress/output queue after processing. Both ingress/input and egress/output queues may reside in smart NIC 100. Smart NIC 100 may comprise a component of a router, switch or host that handles various networking, security, and storage functionality.

In the packet processing architecture of FIG. 1, each engine 110-114 executes the table flow graph 122 for the packets it processes. The table flow graph may include conditional executions such that the path followed by each packet through the table flow graph may be different. An ordering domain for each packet is assigned before issuing the packet, and packets are queued back in order into the egress queues. The ordering only needs to be preserved on a per ordering domain basis, so packets belonging to different ordering domains (flows) do not have any ordering relation at all.

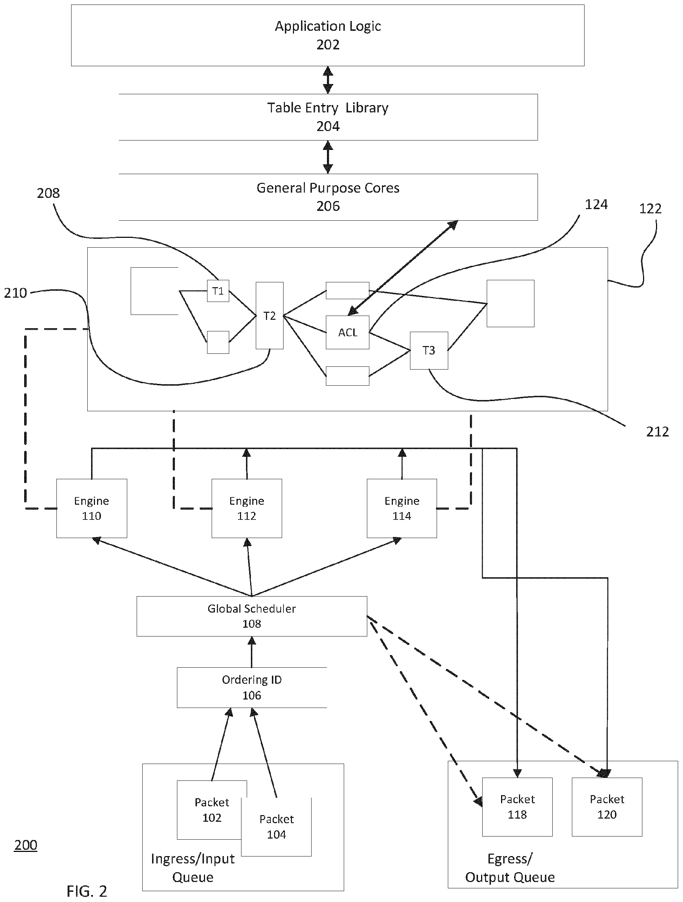

In keeping with the example architecture discussed above, and with reference to FIG. 2, let's consider block 124 to be an ACL table 124 and that application logic or software 202 has an update or change for ACL table 124. Application logic 202 may be part of software embedded in a smart NIC. Table update requests originated by the application logic may invoke a vendor provided API that performs the actual insertion.

The application logic 202 communicates with table entry library 204 to effect the change by updating, writing or deleting entries from table entry library 204. The change or update is then communicated from the table entry library 204 to one or more control plane processors (e.g., ARM CPUs) or general purpose cores 206. This may occur, for instance, by having the processors or cores 206 being prompted of the change thereby causing them to access the library. To improve performance, these update operations can be batched, operate asynchronously, and the ARM may have queues (e.g., configuration queues) in a memory subsystem of NIC 100. To indicate successful completion of these operations, an ARM subsystem could post status back to the calling application (e.g., application logic 202) in an asynchronous manner.

Given that all the tables usually reside in a coherent memory domain, changes are visible to the engine processors at the same time for a given address. Processors or cores 206 are typically capable of addressing each individual table in the pipeline to add/remove entries. Flow table 122 may also be accessible by the general purpose cores through a shared memory interface. Flow table 122 contains flows that are used to perform packet lookup, modification and forwarding. A flow is typically defined by a tuple key, e.g., (src_ip, dst_ip, protocol, src_port, dst_port). Flows specified by flow table 122 may be looked up by engines 110-114 in processing packets received at ingress queue(s), such as packets 102, 104.

To further elucidate aspects of the disclosed technology, consider, for instance, the following sequence of operations for a flow F1 (ordering domain) with three packets P1, P2, P3. Consider next the following assignment of these packets to engines: P1 is assigned to E1, P2 to E2 and P3 to E3. With reference to FIG. 2, consider next that E1 engine is currently executing at table T1 (208), E2 at T3 (212), and E3 at T2 (210) (since engine execution is independent of another engine, each engine may be operating at relatively different points in the table flow graph). If at this time, an update is effected at ACL table 124 to drop all packets belonging to this flow, not all engines processing the flow will see the update. Specifically, since E1 is at t1 (208), E1 will see the update when, as part of its processing flow, it looks up the ACL table 124. Thus, P1 will be dropped. E2, which is at T3 (212) will not see the update since its processing flow is at a point after ACL table 124. E3, which is at T2 (210) will see the update when it looks up ACL table 124 and P3 will be dropped. As a result, via the architecture illustrated in FIG. 2, the update is not reflected in packets within the same flow after it comes into effect. In other words, the endpoint to which these packets are delivered, will see the packet sequence P1, P3, but not P2. It may also see few other packets for the flow, depending on the relative speeds of those engines. As long as it sees packets before P1, the endpoint view would be correct, but would be incorrect if it sees any packets after P2 (since that is the point that the ACL is considered applied on the flow).

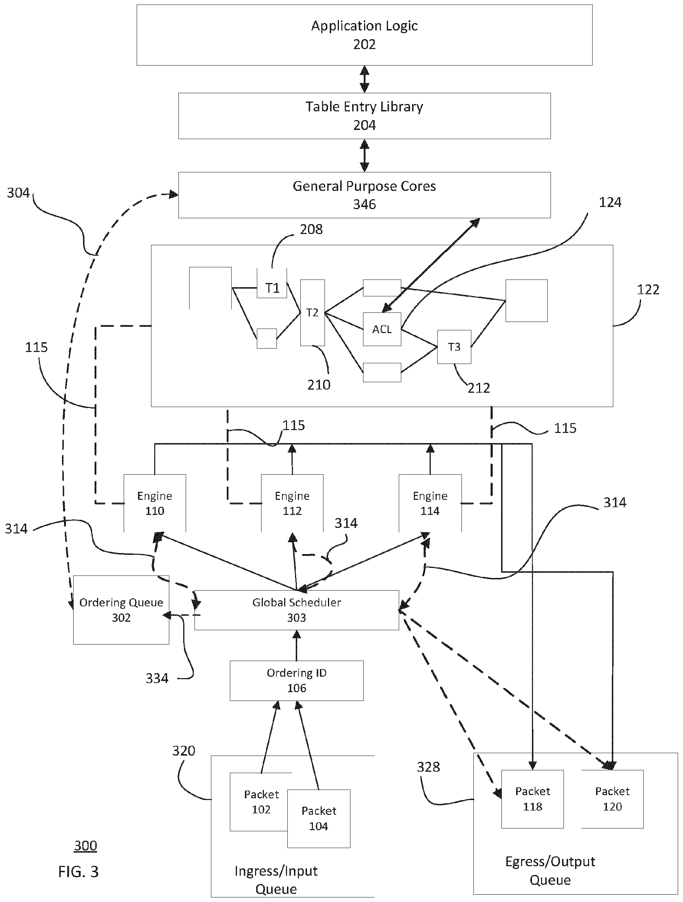

FIG. 3 depicts a block diagram of an example packet processing architecture 300 in accordance with one or more aspects of the disclosure. As shown, the architecture 300 includes some additional components (e.g., buses, queue) than those discussed in relation for communicates with FIGS. 1 and 2. Specifically, the architecture includes an ordering queue 302 that communicates with global scheduler 303 and general purpose cores 20 via bus 304. In addition, communication bus(es) 314 are for communications between engines 110, 112 and 114 and global scheduler 303. In accordance with this architecture, a stream of incoming packets, as exemplified by packets 102, 104 are queued in ingress/input queue 320 for eventual processing by engines 110, 112 and 114. Ordering ID block 106 assigns identifiers to the incoming packets so as track the order in which packets arrive for processing. Global scheduler 303 uses the identifiers to ensure that the order is preserved in egress/output queue 328 so that packets are outputted from egress/output queue 328 in the order they were received.

Global scheduler 303 also determines which engine from among available engines 110, 112, 114 should process a given packet. In addition, global scheduler 303 communicates with ordering queue 302 via bus 334. Ordering queue 302 is used to queue one or more ordering request tokens issued by general purpose cores 346 using bus or line 304. For instance, when encountering any set of operations that require a strong ordering guarantee (e.g., using the strong_consistency variable discussed above in relation to the table_op command or instruction), the general purpose cores generates a request token which is held in ordering queue 302. The request token may include a flow_id to further optimize processing or may be generic to avoid replicating the ordering_id computation and reduce the complexity of the hardware logic. Global scheduler 303 pulls or reads the information in ordering queue 302. Depending on the status of ordering queue 302, global scheduler 303 may insert a FENCE request to the engine pipeline, e.g., as illustrated via engines 110, 112, 114, over bus 314. Engines within the engine pipeline may be either executing instructions from an instruction cache, or servicing out-of-band requests (e.g., FENCE) arriving via bus or line 314 as part of a per-engine instruction queue. Once all the engines complete processing of any instructions in the instructions queue prior to issuance of the FENCE request, a FENCE_ACK request is communicated to the global scheduler 303, which serves as a signal that table updates may now commence.

For instance, in an example operation, application logic 202 may update table entry library 204 by adding an operation requiring a strong ordering guarantee that would result in a change to table 124. General purpose cores 346, upon determining via table entry library 204 that a change needs to be made to flow 122, may add an ordering request token to ordering queue 302 via communication bus or line 304. Global scheduler 108 may receive an ordering request from ordering queue 302 by periodically polling ordering queue 302 to determine whether ordering queue 302 is empty. Alternatively, ordering queue 302 may send each ordering request it receives to global scheduler 303. In some examples, as soon as global scheduler 308 pulls or receives a request from ordering queue 302, the scheduling algorithm switches to a "flow_id" based assignment of packets to engine queues. This starts the phase of in-order execution of all packets belonging to a flow.

More specifically, if ordering queue 302 is not empty, global scheduler 108 may issue a FENCE instruction to engines 110-114. Each engine 110-114 may issue back a "FENCE_ACK" instruction to global scheduler 303 once each engine reaches the commit stage in its pipeline (i.e., a given engine completed processing of any instructions its instructions queue prior to issuance of the FENCE request). When global scheduler 303 receives "FENCE_ACK" instructions from engines 110-114 (more generally all engines), global scheduler 303 queues a REQUEST_ACK to the general purpose cores 346, e.g., via a core subsystem, indicating the memory operation on the ACL table 124 can now be performed.

Once the general purpose core 346 completes the update, general purpose core 246 issues a "REQUEST_COMPLETE" message or instruction to global scheduler 308. When global scheduler 108 receives the "REQUEST_COMPLETE" message or instruction, global scheduler 303 may instruct engines 110-114 to switch back to the out-of-order packet processing.

In contrast to the processing of P1, P2 and P3 discussed above in relation to FIG. 2, processing in accordance in FIG. 3 avoids the endpoint receiving packets that make up a flow out-of-order since the update is issued only after either all these packets have gone through, or the engines have been switched to in-order processing, so only one engine is processing all the packets belonging to a flow which is guaranteed to then arrive in-order.

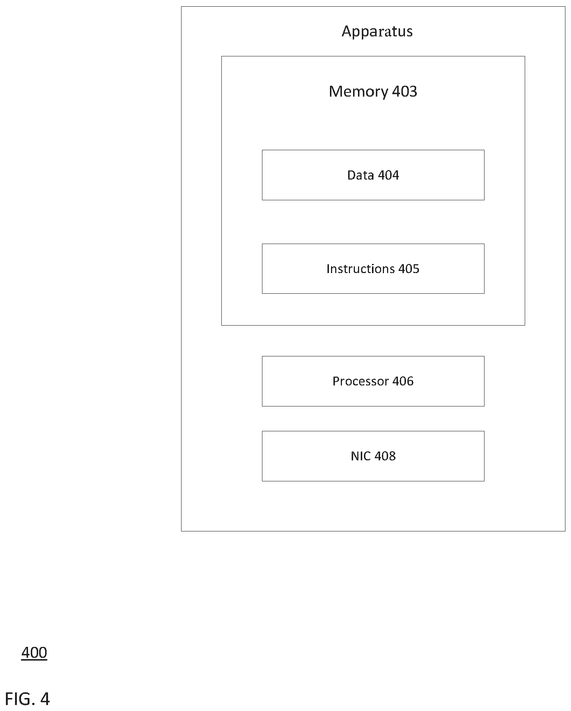

FIG. 4 depicts a block diagram of an example apparatus 400 in accordance with one or more aspects of the disclosed technology. Apparatus 400 may comprise a host machine such as a server, a switch, a router or any other device that includes a NIC device, such as NIC 408. More generally, apparatus 400 may comprise a node in a computing network. In some examples, the node may take the form of a host machine, a router, a switch or NIC 408. In other examples, at a higher level of abstract, the node may comprise a datacenter that communicates with other data centers as part of a cloud computing platform.

As shown, apparatus 400 may include memory 403 comprising data 404 and instruction 405. Apparatus 400 may also include processor 406 and NIC 408. Memory 403 may include any type of non-transitory computer-readable medium capable of storing information, such as a hard-drive, solid state drive, tape drive, optical storage, memory card, ROM, RAM, DVD, CD-ROM, write-capable, and read-only memories. Memory 403 can store information accessible by processors 406 including instructions 405 that can be executed by processors 406. Processors 406 may include one or more central processing units (CPUs), graphic processing units (GPUs), field-programmable gate arrays (FPGAs), and/or application-specific integrated circuits (ASICs), such as tensor processing units (TPUs).

Instructions 405 can include one or more instructions that when executed by the processor(s) 406 causes one or more processors to perform actions defined by the instructions. The instructions 405 can be stored in object code format for direct processing by the processor(s) 406 or in other formats including interpretable scripts or collections of independent source code modules that are interpreted on demand or compiled in advance. Instructions 405 can include instructions for implementing processes consistent with aspects of this disclosure. Such processes can be executed using processor(s) 406. The data 404 can be retrieved, stored, or modified by processor(s) 406 in accordance with instructions 405.

NIC 408 may be any device or a hardware component that may provide a dedicated network connection. NIC 408 may include smart NICs containing one or more specialized hardware components and may be implemented as a SoC. NIC 408 may allow both wired and wireless communications via local area network (LAN) as well as through Internet Protocol (IP). NIC may comprise a physical layer and a data layer. NIC 408 may comprise an apparatus that includes the components discussed above in relation to FIG. 3. More specifically, NIC 408 may comprise a multi-core processor device equipped with multiple input and output ports, a set of acceleration engines, queues, application logic and table library capable of implementing the processes discussed above in relation to FIG. 3, as well the descriptions in the summary section and overview section above and processes discussed below.

### Method(s)/Process(es)

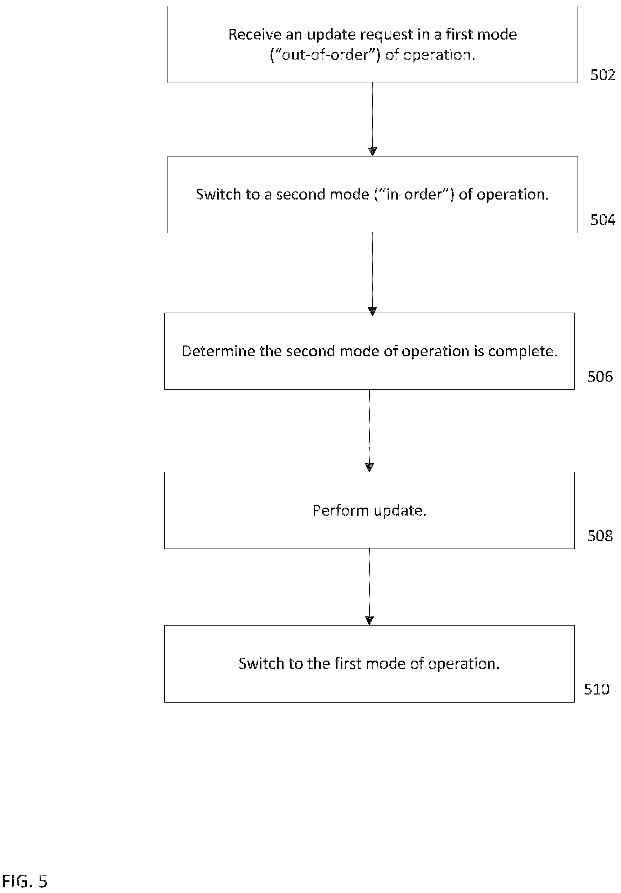

FIG. 5 depicts a flow diagram of an example method 500 for packet processing in a system comprising multiple processing engines. According to block 502, an update request is receiving at a processing apparatus operating in the first mode of operation. The first mode of operation may include an out-of-order packet processing using one or more engines within the apparatus. The update request comprises a request to update one or more rules relating to a packet processing flow associated with the apparatus.

According to block 504, in response to receiving the update request, the engines may switch to the second mode of operation when each engine completes the processing of packets received before the update request. The second mode of operation comprises in-order processing of packets using an engine per flow or domain of the packets. For example, a first engine may process the complete set of packets belonging to one flow and a second engine may process another complete set of packets belonging to a second flow.

According to block 506, a determination is made to determine whether in-order processing is complete. In-order processing of the packets is considered completed for a given engine when that engine completes processing of all the instructions that existed in its instruction queue before the update request was received. Once in-order processing is completed for all the engines, the update may be implemented as shown at block 508.

According to block 510, the engines switch back to the first mode of operation after the update is implemented, e.g., all the tables to which the rule change pertains are updated. For example, once a global scheduler in a smart NIC receives the completion instructions from every engine, the global scheduler may instruct the engines to switch to the first mode of operation.

Aspects of the disclosed technology may be embodied in an apparatus, system, method or process.

In this specification the phrase "configured to" is used in different contexts related to computer systems, hardware, or part of a computer program, engine, or module. When a system is said to be configured to perform one or more operations, this means that the system has appropriate software, firmware, and/or hardware installed on the system that, when in operation, causes the system to perform the one or more operations. When some hardware is said to be configured to perform one or more operations, this means that the hardware includes one or more circuits that, when in operation, receive input and generate output according to the input and corresponding to the one or more operations. When a computer program, engine, or module is said to be configured to perform one or more operations, this means that the computer program includes one or more program instructions, that when executed by one or more computers, causes the one or more computers to perform the one or more operations.

Although the technology herein has been described with reference to particular examples, it is to be understood that these examples are merely illustrative of the principles and applications of the present technology. It is therefore to be understood that numerous modifications may be made and that other arrangements may be devised without departing from the scope of the present technology as defined by the appended claims.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A method for packet processing in a system comprising multiple packet processing engines, the method comprising:
receiving (502), at a scheduler (303) operating in a first mode in which packets are distributed among the multiple packet processing engines (110, 112, 114) for processing, an ordering request;
switching (504), by the scheduler (303) in response to the ordering request, to a second mode of operation in which all packets belonging to a same ordering domain are sent to a given packet processing engine (110, 112, 114) of the multiple packet processing engines for in-order processing;
determining (506), by the scheduler (303), that the in-order processing is complete; and
switching (510), by the scheduler (303), to the first mode.

2. The method of claim 1, further comprising:
issuing, in response to the ordering request, a fence instruction to one or more other packet processing engines of the multiple packet processing engines;
receiving a fence acknowledgment from each of the one or more other packet processing engines, the fence acknowledgement indicating that a respective packet processing engine has finished committing instructions.

3. The method of claim 2, wherein the ordering request comprises an indication that a lookup table entry or a rule associated with processes implemented by at least one of the multiple packet processing engines has changed.

4. The method of claim 3, further comprising:
incrementing a shared counter when an ordering request is received; and
decrementing the shared counter when the ordering request is complete, wherein the shared counter is stored in a shared memory.

5. The method of claim 4 , wherein the shared memory supports a request state, a response state, and a completion state.

6. The method of claim 5, further comprising changing, by the given packet processing engine, a state of the shared memory to the response state when the fence acknowledgment is received from each of the one or more other packet processing engines.

7. The method of claim 5, further comprising changing the state of the shared memory to the completion state when in-order processing is complete.

8. The method of one of claims 1 to 7, wherein in the first mode the packets are distributed among the packet processing engines without consideration of an ordering identifier.

9. The method of one of claims 1 to 8, further comprising:
receiving, at an Access Control List, ACL, table, an ordering constraint, wherein the ordering constraint updates the ACL table,
wherein the ordering constraint is optionally translated to the ordering request.

10. A system comprising multiple packet processing engines configured to perform the method of one of claims 1 to 9.

11. A computer-readable medium comprising instructions which, when executed by a system comprising multiple packet processing engines, cause the packet processing engines to carry out the method of one of claims 1 to 9.

## Patentansprüche

1. Verfahren zur Paketverarbeitung in einem System, das mehrere Paketverarbeitungs-Engines umfasst, wobei das Verfahren Folgendes umfasst:
Empfangen (502), an einem Scheduler (303), der in einem ersten Modus arbeitet, in dem Pakete zur Verarbeitung unter den mehreren Paketverarbeitungs-Engines (110, 112, 114) verteilt werden, einer Ordnungsanforderung;
Umschalten (504), durch den Scheduler (303) als Reaktion auf die Ordnungsanforderung, in einen zweiten Betriebsmodus, in dem alle Pakete, die zu derselben Ordnungsdomäne gehören, zur In-Order-Verarbeitung an eine gegebene Paketverarbeitungs-Engine (110, 112, 114) der mehreren Paketverarbeitungs-Engines gesendet werden;
Bestimmen (506), durch den Scheduler (303), dass die In-Order-Verarbeitung abgeschlossen ist; und
Umschalten (510), durch den Scheduler (303), in den ersten Modus.

2. Verfahren nach Anspruch 1, ferner umfassend:
Ausgeben, als Reaktion auf die Ordnungsanforderung, einer Fence-Anweisung an eine oder mehrere andere Paketverarbeitungs-Engines der mehreren Paketverarbeitungs-Engines;
Empfangen einer Fence-Bestätigung von jeder der einen oder mehreren anderen Paketverarbeitungs-Engines, wobei die Fence-Bestätigung angibt, dass eine jeweilige Paketverarbeitungs-Engine das Festschreiben von Anweisungen abgeschlossen hat.

3. Verfahren nach Anspruch 2, wobei die Ordnungsanforderung eine Angabe umfasst, dass sich ein Nachschlagetabelleneintrag oder eine Regel, die mit Prozessen verknüpft ist, die durch mindestens eine der mehreren Paketverarbeitungs-Engines implementiert werden, geändert hat.

4. Verfahren nach Anspruch 3, ferner umfassend:
Inkrementieren eines gemeinsam genutzten Zählers, wenn eine Ordnungsanforderung empfangen wird; und
Dekrementieren des gemeinsam genutzten Zählers, wenn die Ordnungsanforderung abgeschlossen ist, wobei der gemeinsam genutzte Zähler in einem gemeinsam genutzten Speicher gespeichert ist.

5. Verfahren nach Anspruch 4, wobei der gemeinsam genutzte Speicher einen Anforderungszustand, einen Antwortzustand und einen Abschlusszustand unterstützt.

6. Verfahren nach Anspruch 5, ferner umfassend das Ändern, durch die gegebene Paketverarbeitungs-Engine, eines Zustands des gemeinsam genutzten Speichers in den Antwortzustand, wenn die Fence-Bestätigung von jeder der einen oder mehreren anderen Paketverarbeitungs-Engines empfangen wird.

7. Verfahren nach Anspruch 5, ferner umfassend das Ändern des Zustands des gemeinsam genutzten Speichers in den Abschlusszustand, wenn die In-Order-Verarbeitung abgeschlossen ist.

8. Verfahren nach einem der Ansprüche 1 bis 7, wobei im ersten Modus die Pakete ohne Berücksichtigung einer Ordnungskennung unter den Paketverarbeitungs-Engines verteilt werden.

9. Verfahren nach einem der Ansprüche 1 bis 8, ferner umfassend:
Empfangen, an einer Access-Control-List-(ACL-)Tabelle, einer Ordnungsbeschränkung, wobei die Ordnungsbeschränkung die ACL-Tabelle aktualisiert,
wobei die Ordnungsbeschränkung optional in die Ordnungsanforderung übersetzt wird.

10. System, umfassend mehrere Paketverarbeitungs-Engines, die konfiguriert sind, um das Verfahren nach einem der Ansprüche 1 bis 9 durchzuführen.

11. Computerlesbares Medium, umfassend Anweisungen, die bei Ausführung durch ein System, das mehrere Paketverarbeitungs-Engines umfasst, die Paketverarbeitungs-Engines veranlassen, das Verfahren nach einem der Ansprüche 1 bis 9 durchzuführen.

## Revendications

1. Procédé de traitement de paquets dans un système comprenant de multiples moteurs de traitement de paquets, le procédé comprenant :
la réception (502), au niveau d'un planificateur (303) fonctionnant dans un premier mode dans lequel les paquets sont distribués parmi les multiples moteurs de traitement de paquets (110, 112, 114) pour traitement, d'une demande d'ordonnancement ;
la commutation (504), par le planificateur (303) en réponse à la demande d'ordonnancement, vers un second mode de fonctionnement dans lequel tous les paquets appartenant à un même domaine d'ordonnancement sont envoyés à un moteur de traitement de paquets donné (110, 112, 114) des multiples moteurs de traitement de paquets pour un traitement en ordre ;
la détermination (506), par le planificateur (303), que le traitement en ordre est terminé ; et
la commutation (510), par le planificateur (303), vers le premier mode.

2. Procédé selon la revendication 1, comprenant en outre :
l'émission, en réponse à la demande d'ordonnancement, d'une instruction de clôture à un ou plusieurs autres moteurs de traitement de paquets parmi les multiples moteurs de traitement de paquets ;
la réception d'un accusé de réception de clôture à partir de chacun des un ou plusieurs autres moteurs de traitement de paquets, l'accusé de réception de clôture indiquant qu'un moteur de traitement de paquets respectif a terminé de valider des instructions.

3. Procédé selon la revendication 2, dans lequel la demande d'ordonnancement comprend une indication qu'une entrée de table de consultation ou une règle associée aux processus mis en œuvre par au moins l'un des multiples moteurs de traitement de paquets a été modifiée.

4. Procédé selon la revendication 3, comprenant en outre :
l'incrémentation d'un compteur partagé lors de la réception d'une demande d'ordonnancement ; et
la décrémentation du compteur partagé lorsque la demande d'ordonnancement est terminée, dans lequel le compteur partagé est stocké dans une mémoire partagée.

5. Procédé selon la revendication 4, dans lequel la mémoire partagée prend en charge un état de demande, un état de réponse et un état d'achèvement.

6. Procédé selon la revendication 5, comprenant en outre la modification, par le moteur de traitement de paquets donné, d'un état de la mémoire partagée à l'état de réponse lorsque l'accusé de réception de clôture est reçu à partir de chacun des un ou plusieurs autres moteurs de traitement de paquets.

7. Procédé selon la revendication 5, comprenant en outre la modification de l'état de la mémoire partagée à l'état d'achèvement lorsque le traitement en ordre est terminé.

8. Procédé selon l'une des revendications 1 à 7, dans lequel, dans le premier mode, les paquets sont distribués parmi les moteurs de traitement de paquets sans tenir compte d'un identifiant d'ordonnancement.

9. Procédé selon l'une des revendications 1 à 8, comprenant en outre :
la réception, dans une table de liste de commande d'accès, ACL, d'une contrainte d'ordonnancement, dans lequel la contrainte d'ordonnancement met à jour la table ACL,
dans lequel la contrainte d'ordonnancement est éventuellement traduite en demande d'ordonnancement.

10. Système comprenant de multiples moteurs de traitement de paquets configurés pour réaliser le procédé selon l'une des revendications 1 à 9.

11. Support lisible par ordinateur comprenant des instructions qui, lorsqu'elles sont exécutées par un système comprenant de multiples moteurs de traitement de paquets, amènent les moteurs de traitement de paquets à effectuer le procédé selon l'une des revendications 1 à 9.
